# EUROPEAN PATENT APPLICATION

(11) **EP 4 380 072 A1**
(43) Date of publication of application: **05.06.2024**
(21) Application number: 22848635.3
(22) Date of filing: 28.07.2022
(51) Int. Cl.: H04B 7/155, H04W 28/00, H04B 7/26, H04W 72/12

(54) **SIGNAL TRANSMISSION METHOD, REPEATER AND NETWORK SIDE DEVICE**

(30) Priority: 30.07.2021 CN 202110873152
(71) Applicant: VIVO MOBILE COMMUNICATION CO., LTD., Dongguan, Guangdong 523863 (CN)
(72) Inventor: PENG, Shuyan, Dongguan, Guangdong 523863 (CN); WANG, Huan, Dongguan, Guangdong 523863 (CN); LIU, Jinhua, Dongguan, Guangdong 523863 (CN)
(74) Representative: Murgitroyd & Company
(86) International application number: PCT/CN2022/108606
(87) International publication number: WO 2023/006030

(57) **Abstract**

This application discloses a signal transmission method, a repeater, and a network-side device, and pertains to the field of wireless communication technologies. The signal transmission method in embodiments of this application includes: determining, by a repeater, transmission behavior based on first information, where the first information includes TDD configuration information and/or data scheduling information; and performing, by the repeater, signal transmission based on the transmission behavior.

## Description

### CROSS-REFERENCE TO RELATED APPLICATION

The present invention claims priority to Chinese Patent Application No. 202110873152.2, filed with the China National Intellectual Property Administration on July 30, 2021 and entitled "SIGNAL TRANSMISSION METHOD, REPEATER, AND NETWORK-SIDE DEVICE", which is incorporated herein by reference in its entirety.

### TECHNICAL FIELD

This application pertains to the field of wireless communication technologies, and specifically, relates to a signal transmission method, a repeater, and a network-side device.

### BACKGROUND

In a related communication technology, a repeater (Repeater) is introduced to increase wireless signal strength, extend a cell coverage area, and the like. For example, during wireless communication, a repeater may receive a downlink signal transmitted by a network-side device such as a base station, amplify the downlink signal, and forward the downlink signal amplified to a terminal, to enhance strength of a downlink signal arriving at the terminal; or the repeater may receive an uplink signal from the terminal, amplify the uplink signal, and forward an amplified uplink signal to the network-side device such as the base station, to enhance strength of an uplink signal arriving at the base station.

However, the repeater lacks an effective time division duplex (Time Division Duplex, TDD) configuration when amplifying and forwarding uplink (Uplink, UL) data or downlink (Downlink, DL) data, and therefore cannot effectively distinguish between UL amplification and DL amplification, leading to low signal transmission efficiency.

### SUMMARY

Embodiments of this application provide a signal transmission method, a repeater, and a network-side device, to resolve a problem that a repeater cannot effectively distinguish between UL amplification and DL amplification.

According to a first aspect, a signal transmission method is provided, including: determining, by a repeater, transmission behavior based on first information, where the first information includes time division duplex TDD configuration information and/or data scheduling information; and performing, by the repeater, signal transmission based on the transmission behavior.

According to a second aspect, a signal transmission method is provided, including: transmitting, by a network-side device, first information to a repeater, where the first information includes time division duplex TDD configuration information and/or data scheduling information.

According to a third aspect, a signal transmission apparatus is provided and applied to a repeater, where the apparatus includes: a determining module, configured to determine, for the repeater, transmission behavior based on first information, where the first information includes time division duplex TDD configuration information and/or data scheduling information; and a first transmission module, configured to perform signal transmission based on the transmission behavior.

According to a fourth aspect, a signal transmission apparatus is provided, including: a second transmission module, configured to transmit first information to a repeater, where the first information includes time division duplex TDD configuration information and/or data scheduling information.

According to a fifth aspect, a repeater is provided, where the repeater includes a processor, a memory, and a program or instructions stored in the memory and executable on the processor, and when the program or instructions are executed by the processor, the steps of the method according to the first aspect are implemented.

According to a sixth aspect, a repeater is provided, including a processor and a communication interface, where the communication interface is coupled to the processor, and the processor is configured to run a program or instructions, to implement the steps of the method according to the first aspect.

According to a seventh aspect, a network-side device is provided, where the network-side device includes a processor, a memory, and a program or instructions stored in the memory and executable on the processor, and when the program or instructions are executed by the processor, the steps of the method according to the second aspect are implemented.

According to an eighth aspect, a network-side device is provided, including a processor and a communication interface, where the communication interface is coupled to the processor, and the processor is configured to run a program or instructions, to implement the steps of the method according to the second aspect.

According to a ninth aspect, a readable storage medium is provided, where the readable storage medium stores a program or instructions, and when the program or instructions are executed by a processor, the steps of the method according to the first aspect are implemented, or the steps of the method according to the second aspect are implemented.

According to a tenth aspect, a chip is provided, where the chip includes a processor and a communication interface, the communication interface is coupled to the processor, and the processor is configured to run a program or instructions, to implement the steps of the method according to the first aspect, or implement the steps of the method according to the second aspect.

According to an eleventh aspect, a computer program product or program product is provided, where the computer program or program product is stored in a non-transitory storage medium, and the program or program product is executed by at least one processor to implement the steps of the method according to the first aspect or the second aspect.

In the embodiments of this application, the repeater determines the transmission behavior based on the TDD configuration information and/or the data scheduling information, and then performs signal transmission based on the transmission behavior. In this way, whether UL amplification or DL amplification should be performed is made clear to match a corresponding beam (beam)/power control mode, so as to implement effective signal transmission and ensure performance of wireless communication.

### BRIEF DESCRIPTION OF DRAWINGS

FIG. 1 is a schematic structural diagram of a wireless communication system according to an example embodiment of this application;
FIG. 2 is a schematic flowchart of a signal transmission method according to an example embodiment of this application;
FIG. 3 is a schematic flowchart of a signal transmission method according to another example embodiment of this application;
FIG. 4 is a schematic diagram of an indication process of first information according to an example embodiment of this application;
FIG. 5 is a schematic flowchart of a signal transmission method according to another example embodiment of this application;
FIG. 6 is a schematic flowchart of a signal transmission method according to another example embodiment of this application;
FIG. 7 is a schematic structural diagram of a signal transmission apparatus according to an example embodiment of this application;
FIG. 8 is a schematic structural diagram of a signal transmission apparatus according to another example embodiment of this application;
FIG. 9 is a schematic structural diagram of a repeater according to an example embodiment of this application; and
FIG. 10 is a schematic structural diagram of a network-side device according to an example embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances, so that the embodiments of this application can be implemented in an order other than the order illustrated or described herein. In addition, the objects distinguished by "first" and "second" usually belong to one category, and the number of objects is not limited. For example, there may be one or more first objects. In addition, in this specification and the claims, "and/or" represents at least one of connected objects, and the character "/" typically represents an "or" relationship between the associated objects.

It should be noted that the technologies described in the embodiments of this application are not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), an intelligent surface (Reconfigurable Intelligent Surface, RIS), and other systems. The terms "system" and "network" in the embodiments of this application are usually used interchangeably, and the technologies described herein may be used in the aforementioned systems and radio technologies, and may also be used in other systems and radio technologies. In the following descriptions, a new radio (New Radio, NR) system is described for an illustration purpose, and NR terms are used in most of the following descriptions, but these technologies may also be applied to applications other than an NR system application, for example, a 6th generation (6th Generation, 6G) communication system.

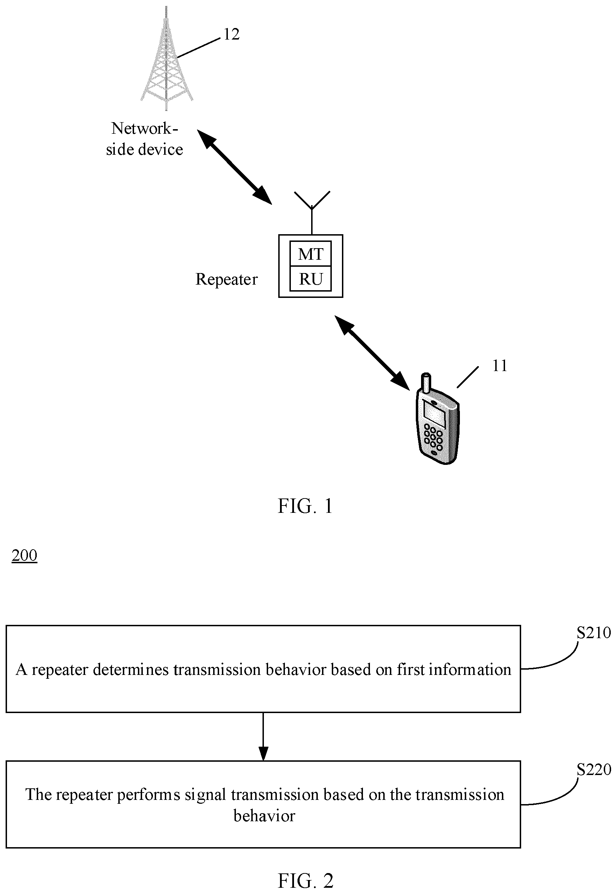

FIG. 1 is a schematic structural diagram of a wireless communication system to which an embodiment of this application is applicable. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PUE). The wearable device includes a smartwatch, a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited.

The repeater may be understood as a smart (Smart) repeater, a signal repeater, or the like. In the embodiments, the repeater may include a mobile termination (Mobile Termination, MT) and a radio unit (Radio Unit, RU). The MT is configured to establish a connection to a network-side device (for example, a gNB, a donor (donor) node, or a core network node). That is, the network-side device exchanges information with the repeater through the MT, so that the repeater can receive control from the network-side device. For example, the network-side device may control a transmission parameter of the repeater, on/off of the repeater, and a transmit beam. The RU is configured to establish a connection to UE for signal interaction.

It should be noted that the repeater may be understood as a network node located between the UE and the network-side device to implement processing, such as amplification and forwarding, of uplink/downlink signals.

The following describes in detail the technical solutions provided in the embodiments of this application with reference to the accompanying drawings and by using some embodiments and application scenarios thereof.

FIG. 2 is a schematic flowchart of a signal transmission method 200 according to an example embodiment of this application. The method 200 may be performed by a repeater but is not limited thereto, and may be specifically performed by hardware and/or software installed in the repeater. In this embodiment, the method 200 may include at least the following steps.

S210: The repeater determines transmission behavior based on first information.

The first information may be transmitted by a network-side device (for example, a donor node or a gNB) for indicating a TDD pattern (pattern), namely, UL, DL, or flexible (flexible), applicable to the repeater, so that the repeater determines the transmission behavior of the repeater. It should be noted that the transmission behavior may also be understood as a transmission direction, for example, a UL direction, a DL direction, or a flexible (flexible) direction.

The first information may include at least TDD configuration information and/or data scheduling information.

The data scheduling information indicates a TDD pattern applicable to the repeater. In addition, in this embodiment, the data scheduling information is further used for data scheduling for the terminal or the repeater. Based on this, a process of determining, by the repeater, the transmission behavior based on the data scheduling information may include: The transmission behavior may be uplink transmission in a case that data scheduled by the data scheduling information is UL data; or the transmission behavior may be downlink transmission in a case that data scheduled by the data scheduling information is DL data; or the transmission behavior may be no transmission in a case that the data scheduling information does not perform data scheduling.

The TDD configuration information may be dedicated for the repeater. In this embodiment, the TDD configuration information may be agreed upon in a protocol or implemented through network-side configuration or higher-layer configuration. For example, in this embodiment, the TDD configuration information may be determined by a network-side device based on at least one of the following (101) and (102) and then transmitted to the repeater.

(101) TDD configuration information of a terminal accessing the repeater.

When the network-side device determines the TDD configuration information of the repeater based on the TDD configuration information of the terminal accessing the repeater, a determining process may include at least one of the following (1010) to (1112):
(1010) if the UE is configured as UL, determining that the repeater is to perform UL transmission;
(1011) if the UE is configured as DL, determining that the repeater is to perform DL transmission; and
(1012) if the UE is in a flexible time unit, determining that the repeater is in an OFF state, where the OFF state may be a state in which an RU part does not amplify or transmit an input signal, and may include at least one of an RU sleep state, a low output power state, a low amplification state, and a power-off state.

It should be noted that the determining, by the network-side device, the TDD configuration information of the repeater based on the TDD configuration information of the terminal accessing the repeater may also be understood as determining, by the network-side device, an SFI of the repeater by monitoring TDD configuration information carried in a slot format indication (Slot Format Indication, SFI) or the like of the terminal.

(102) Data scheduling information of the terminal accessing the repeater.

The data scheduling information may be radio resource control (Radio Resource Control, RRC) configured scheduling or downlink control information (Downlink Control Information, DCI) dynamic scheduling. For example, the terminal may have dynamically scheduled UL/DL transmission on a flexible symbol (symbol). In this case, the network-side device may monitor dynamic scheduling information of the terminal to determine the TDD configuration information, such as UL transmission or DL transmission, of the repeater.

Based on this, when the network-side device determines the data scheduling information of the repeater based on the TDD configuration information of the terminal accessing the repeater, a determining process may include at least one of the following (1020) and (1021):
(1020) if the data scheduling information schedules the UE for UL transmission, determining that the repeater is to perform UL transmission; and
(1021) if the data scheduling information schedules the UE for DL transmission, determining that the repeater is to perform DL transmission.

S220: The repeater performs signal transmission based on the transmission behavior.

In a possible implementation, a manner of performing, by the repeater, signal transmission based on the transmission behavior may include at least one of the following (201) to (203):
(201) the repeater performs uplink transmission in a case that the transmission behavior is uplink transmission;
(202) the repeater performs downlink transmission in a case that the transmission behavior is downlink transmission; and
(203) the repeater does not perform signal transmission in a case that the transmission behavior is flexible transmission.

It can be understood that, in (201) to (203), the uplink transmission may include at least one of uplink reception, uplink amplification, and uplink forwarding; and/or the downlink transmission includes at least one of downlink reception, downlink amplification, and downlink forwarding.

In this embodiment, the repeater determines the transmission behavior based on the TDD configuration information and/or the data scheduling information, and then performs signal transmission based on the transmission behavior. In this way, whether UL amplification or DL amplification should be performed can be made clear to match a corresponding beam/power control mode, so as to implement effective signal transmission and ensure performance of wireless communication.

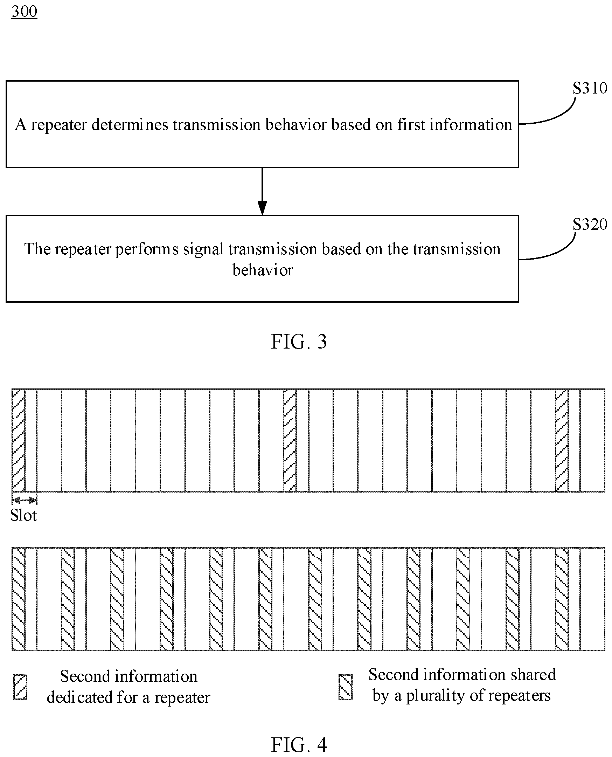

FIG. 3 is a schematic flowchart of a signal transmission method 300 according to an example embodiment of this application. The method 300 may be performed by a repeater but is not limited thereto, and may be specifically performed by hardware and/or software installed in the repeater. In this embodiment, the method 300 may include at least the following steps.

S310: The repeater determines transmission behavior based on first information.

The first information includes TDD configuration information and/or data scheduling information.

It can be understood that, for an implementation process of S310, reference may be made to related descriptions in the method embodiment 200. In addition, in a possible implementation, the first information may be transmitted by using at least one of the following (301) to (307).

(301) F1 signaling.

That is, the first information is carried in the F1 signaling to indicate a TDD pattern (namely, TDD configuration information or data scheduling information) to the repeater.

(302) System information block (System Information Block, SIB).

That is, the first information is carried in the SIB (for example, a SIB 1) to indicate a TDD pattern to the repeater.

(303) Master information block (Master Information Block, MIB).

That is, the first information is carried in the MIB to indicate a TDD pattern to the repeater.

(304) Physical downlink control channel (Physical downlink control channel, PDCCH).

That is, the first information is carried in the PDCCH to indicate a TDD pattern to the repeater. Optionally, the PDCCH may be a group common (group common) PDCCH or a specific (specific) PDCCH.

In addition, in a possible implementation, configuration information of the PDCCH may be transmitted by using a SIB and/or a MIB. Optionally, the configuration information of the PDCCH may include at least one of the following (3040) to (3042):
(3040) a time domain resource for detecting the PDCCH;
(3041) a frequency domain resource for detecting the PDCCH, where
(3040) and (3041) may also be understood as that the repeater monitors a specific channel control element (channel control element, CCE)/resource element (Resource Element, RE) or the repeater monitors some time-frequency domain resources, and this is not limited; and
(3042) the number of times of detecting the PDCCH.

It can be understood that, when monitoring the PDCCH, the repeater may determine, based on the configuration information of the PDCCH, a time domain resource, a frequency domain resource, and the like to be monitored.

Further, second information corresponding to the PDCCH meets either of the following that (a) and (b):
(a) the second information is dedicated for the repeater, where
   the second information includes at least one of a search space (Search Space, SS), a radio network temporary identifier (Radio Network Temporary Identifier, RNTI), and a DCI format; or
(b) the second information is shared by a plurality of repeaters, where the plurality of repeaters belong to one cell.

(a) and (b) may be understood as follows: As shown in FIG. 4, an independent SS, RNTI, or DCI format may be configured by using the PUCCH, where the independent SS, RNTI, or DCI format may be an MT dedicated SS, RNTI, or DCI format, or a group common SS, RNTI, or DCI format independently designed for a plurality of repeaters (namely, an RU group) connected to a donor.

(305) RRC.

The RRC may include at least one of cell specific (cell specific) RRC signaling, UE dedicated (UE dedicated) signaling, MT dedicated signaling, and repeater dedicated signaling.

That is, the first information is carried in the cell specific RRC signaling, the UE dedicated signaling, the MT dedicated signaling, or the repeater dedicated signaling to indicate a TDD pattern to the repeater.

(306) Medium access control-control element (Medium Access Control-Control Element, MAC CE).

That is, the first information may be carried in the MAC CE to indicate a TDD pattern to the repeater. In an implementation, a MAC CE may be dynamically used to indicate a TDD pattern to the repeater.

(307) SFI.

The first information may be carried in the SFI to indicate a TDD pattern to the repeater. That is, the repeater may monitor the SFI to determine configuration information of a UL/DL/flexible symbol. For example, the repeater may determine TDD configuration information in a specific period of time according to an indication in the monitored SFI.

In addition, in this embodiment, the SFI may include at least one of a cell specific SFI, a UE dedicated SFI, an MT dedicated SFI, and a repeater dedicated SFI. The MT dedicated SFI is used as an example. The repeater (for example, an RU) may obtain dynamic first information (including TDD configuration information and/or data scheduling information) only based on the MT dedicated SFI, to change a flexible configuration of a semi-persistent configuration, or any one of a UL configuration, a DL configuration, or a flexible configuration of a semi-persistent configuration.

Further, similar to the PDCCH, second information corresponding to the SFI may also meet either of the following that (a) and (b), where the second information includes at least one of a search space, an RNTI, and a DCI format:
(a) the second information is dedicated for the repeater; and
(b) the second information is shared by a plurality of repeaters, where the plurality of repeaters belong to one cell.

(a) and (b) may be understood as follows: still as shown in FIG. 4, an independent SS, RNTI, or DCI format may be configured by using the MT dedicated SFI, where the independent SS, RNTI, or DCI format may be an MT dedicated SS, RNTI, or DCI format, or a group common SS, RNTI, or DCI format independently designed for a plurality of repeaters (namely, an RU group) connected to a donor.

Further, based on the descriptions of (301) to (307), if the repeater sequentially receives a plurality of pieces of first information transmitted by using different information (for example, F1 signaling, a SIB, a MIB, a PUCCH, and an SFI), to ensure validity of a TDD pattern on the repeater, the TDD pattern may be further partially or fully updated in this embodiment. This is described below with reference to different update manners.

Manner 1: An uplink time unit, a downlink time unit, and a flexible time unit in a second TDD pattern are updated based on a first TDD pattern.

The first TDD pattern is determined based on the first information, and the second TDD pattern is determined based on fourth information. Optionally, the second TDD pattern may be a TDD pattern that is in effect and that is dedicated for the repeater, or may be a TDD pattern configured for a common terminal. This is not limited.

Based on this, in Manner 1, all configurations of the uplink time unit, the downlink time unit, and the flexible time unit need to be overridden.

Manner 2: A flexible time unit in a second TDD pattern is updated based on a first TDD pattern.

That is, only a configuration of the flexible time unit is updated (overridden), and configurations of an uplink time unit and a downlink time unit remain unchanged.

Manner 3: An uplink time unit in a second TDD pattern is updated based on a first TDD pattern.

That is, only a configuration of the uplink time unit is overridden, and configurations of a flexible time unit and a downlink time unit remain unchanged.

Manner 4: A downlink time unit in a second TDD pattern is updated based on a first TDD pattern.

That is, only a configuration of the downlink time unit is overridden, and configurations of a flexible time unit and an uplink time unit remain unchanged.

Certainly, for related descriptions in Manner 2 to Manner 4, refer to Manner 1. Details are not described herein again.

In addition, a transmission mode for the first information and the fourth information in the TDD pattern update processes in Manner 1 to Manner 4 may include the following (401) to (405). Content is as follows:
(401) The fourth information is transmitted by using a SIB or a MIB in a case that the first information is transmitted by using RRC signaling.
(402) The fourth information is transmitted by using either a SIB or a MIB in a case that the first information is transmitted by using cell specific RRC signaling.

That is, a first TDD pattern carried in the cell specific RRC signaling may override (override) a second TDD pattern carried in the SIB or the MIB. For an overriding manner, refer to Manner 1 to Manner 4. For example, at least one of a configuration of an uplink time unit, a configuration of a downlink time unit, and a configuration of a flexible time unit in the second TDD pattern may be overridden.

(403) The fourth information is transmitted by using any one of cell specific RRC signaling, a SIB, or a MIB in a case that the first information is transmitted by using any one of UE dedicated RRC signaling, MT dedicated RRC signaling, or repeater dedicated RRC signaling.

That is, a first TDD pattern carried in the UE dedicated RRC signaling, the MT dedicated RRC signaling, or the repeater dedicated RRC signaling may override a second TDD pattern carried in the cell specific RRC signaling.

Alternatively, a first TDD pattern carried in the UE dedicated RRC signaling, the MT dedicated RRC signaling, or the repeater dedicated RRC signaling may override a second TDD pattern carried in the SIB.

Alternatively, a first TDD pattern carried in the UE dedicated RRC signaling, the MT dedicated RRC signaling, or the repeater dedicated RRC signaling may override a second TDD pattern carried in the MIB.

In addition, for an overriding manner, refer to Manner 1 to Manner 4. For example, at least one of a configuration of an uplink time unit, a configuration of a downlink time unit, and a configuration of a flexible time unit in the second TDD pattern may be overridden.

(404) The fourth information is transmitted by using RRC in a case that the first information is transmitted by using a first SFI.

That is, a first TDD pattern carried in the first SFI may override a second TDD pattern carried in the RRC. For an overriding manner, refer to Manner 1 to Manner 4. For example, at least one of a configuration of an uplink time unit, a configuration of a downlink time unit, and a configuration of a flexible time unit in the second TDD pattern may be overridden.

For example, when a network-side device, such as a base station, configures a TDD configuration for the repeater by using RRC, the network-side device, such as the base station, may transmit an SFI (namely, a DCI format 2_0) to rewrite a flexible symbol or the like in a higher-layer TDD configuration.

In addition, the RRC may include at least one of cell specific RRC signaling, UE dedicated signaling, MT dedicated signaling, and repeater dedicated signaling.

(405) The fourth information is transmitted by using a second SFI in a case that the first information is transmitted by using a first SFI.

That is, a first TDD pattern carried in the first SFI may override a second TDD pattern carried in the second SFI. For an overriding manner, refer to Manner 1 to Manner 4. For example, at least one of an uplink time unit, a downlink time unit, and a flexible time unit in the second TDD pattern may be overridden.

In an implementation, because there may be a plurality of types of SFIs, in the case in (405) in which the first information is transmitted by using the first SFI and the fourth information is transmitted by using the second SFI, the first SFI and the second SFI may include at least one of the following (4050) to (4053).

(4050) The second SFI is a UE dedicated SFI in a case that the first SFI is a UE dedicated SFI.

That is, a first TDD pattern carried in a new UE dedicated SFI may override a second TDD pattern carried in a last stored or received UE dedicated SFI. For an overriding manner, refer to Manner 1 to Manner 4. For example, at least one of a configuration of an uplink time unit, a configuration of a downlink time unit, and a configuration of a flexible time unit in the second TDD pattern may be overridden.

(4051) The second SFI is a UE dedicated SFI in a case that the first SFI is an MT dedicated SFI or a repeater dedicated SFI.

That is, a first TDD pattern carried in an MT dedicated SFI or a repeater dedicated SFI may override a second TDD pattern carried in a last stored or received UE dedicated SFI. For an overriding manner, refer to Manner 1 to Manner 4. For example, at least one of a configuration of an uplink time unit, a configuration of a downlink time unit, and a configuration of a flexible time unit in the second TDD pattern may be overridden.

(4052) The second SFI is an MT dedicated SFI or a repeater dedicated SFI in a case that the first SFI is an MT dedicated SFI or a repeater dedicated SFI.

That is, a first TDD pattern carried in an MT dedicated SFI or a repeater dedicated SFI may override a second TDD pattern carried in a last stored or received MT dedicated SFI or repeater dedicated SFI. For an overriding manner, refer to Manner 1 to Manner 4. For example, at least one of a configuration of an uplink time unit, a configuration of a downlink time unit, and a configuration of a flexible time unit in the second TDD pattern may be overridden.

(4053) The second SFI is an MT dedicated SFI or a repeater dedicated SFI in a case that the first SFI is a UE dedicated SFI.

That is, a first TDD pattern carried in a UE dedicated SFI may override a second TDD pattern carried in a last stored or received MT dedicated SFI or repeater dedicated SFI. For an overriding manner, refer to Manner 1 to Manner 4. For example, at least one of a configuration of an uplink time unit, a configuration of a downlink time unit, and a configuration of a flexible time unit in the second TDD pattern may be overridden.

It can be understood that the first SFI may be a new (new) SFI, and the second SFI may be a last stored or previously received SFI. That is, a first TDD pattern carried in a newly received valid SFI may override a second TDD pattern carried in a last stored or previously received SFI. Alternatively, a first TDD pattern carried in a newly received valid SFI may override configurations of some time units, in a second TDD pattern in time domain, that correspond to a last stored or previously received SFI.

In addition, if a new SFI (for example, the first SFI) can simultaneously indicate TDD configurations, such as UL/DL configurations, for a plurality of repeaters, DCI (which represents scheduling signaling) can indicate UL/DL information only for a specific repeater. It should be noted that the new SFI is intended to adapt to a case in which the network-side device dynamically schedules a UL/DL flexible symbol on the UE, and the repeater needs to distinguish between UL amplification and DL amplification at these locations to match corresponding beam/power control parameters and the like.

Further, based on different transmission information given in (301) to (307), assuming that the first information is transmitted by using third information, a type of the third information is related to whether the repeater is in a connected state.

For example, in a case that the repeater is in a non-connected state, the third information may be at least one of a SIB, a MIB, and a PDCCH. That is, in a case that the repeater is in the non-connected state, the first information may be transmitted by using at least one of the SIB, the MIB, and the PDCCH.

For another example, in a case that the repeater is in the connected state, the third information is at least one of F 1 signaling, a SIB, a MIB, a PDCCH, RRC, a MAC CE, and an SFI. That is, in a case that the repeater is in the connected state, the first information may be transmitted by using at least one of the F1 signaling, the SIB, the MIB, the PDCCH, the RRC, the MAC CE, and the SFI.

In addition, in this embodiment, validity time of the third information for transmitting the first information may be determined in a plurality of manners. For example, a determining process is described below with reference to (501) to (503).

(501) The validity time of the third information is determined based on a first value and a first time unit in which the third information is received.

For example, assuming that the first value is L and the repeater receives the third information in a time unit n, validity time of the first information indicated by the third information may be a time unit n+L.

For another example, assuming that the first value is L and the repeater uses, in a time unit n, the first information indicated by the third information, a time unit in which the third information is received may be a time unit n-L.

Optionally, the first value is related to a subcarrier spacing (Subcarrier Spacing, SCS), or the first value is indicated by a network side, agreed upon in a protocol, or implemented through higher-layer configuration, for example, the first value is indicated by the third information. This is not limited herein.

It can be understood that, if the first value is related to the SCS, a relationship between the first value and the SCS may be predefined. For example, when the SCS = 15 kHz, the first value is K1; when the SCS = 30 kHz, the first value is K2; when the SCS = 60 kHz, the first value is K3; or when the SCS = 120 kHz, the first value is K4. In this case, if the validity time of the third information needs to be determined, the first value may be determined based on the predefined relationship between the first value and the SCS.

It should be noted that the time unit mentioned in this embodiment and subsequent embodiments may be a sub-slot (sub-slot), a slot (slot), a sub-frame (sub-Frame), a frame (Frame), a symbol (symbol), a second (s), a millisecond (ms), or the like. This is not limited herein.

(502) The validity time of the third information is determined based on first indication information transmitted by a network-side device.

For example, the validity time of the third information may be implicitly or explicitly indicated in the first indication information.

(503) The validity time of the third information is determined based on time at which next third information is received.

The validity time of the third information starts from a validity start time point of the third information and ends at a time point at which next valid third information is received.

For example, assuming that the third information is an SFI, validity time of the SFI may be from time at which the SFI is received to time at which a next valid SFI is received. That is, the repeater may determine transmission behavior by using configuration information of the SFI, until the next valid SFI is received. The valid SFI may be understood as a DCI format 2_0 or a new SFI format.

For another example, assuming that the third information is F1-AP or RRC, validity time of the F1-AP or the RRC may be from time at which the F1-AP or the RRC is received to time at which next valid F1-AP or RRC is received.

It should be noted that, in (501) to (503), the validity time may include a validity start time point, a validity end time point, validity duration, a validity period, or the like of the third information. This is not limited herein. In addition, the validity time of the third information may also be understood as the validity time of the first information.

Based on the descriptions of the foregoing content, the updating of the configuration information and the determining of the validity time are described below by using an example. Content is as follows:
Example: It is assumed that a network-side device, such as a base station, configures a TDD pattern for the repeater by using RRC. In this case, the network-side device, such as the base station, may transmit an SFI (namely, a DCI format 2_0) to rewrite (update) a flexible symbol in a higher-layer TDD configuration. In this case, the repeater may monitor the SFI transmitted by the network-side device such as the base station, to determine a configuration of a UL/DL/flexible symbol. The repeater may determine a TDD configuration in a period of time according to an indication in the SFI. For example, the repeater uses a configuration of the SFI until a next valid SFI is received. The valid SFI is a DCI format 2_0 or a new SFI (namely, a repeater specific/MT specific SFI).

S320: The repeater performs signal transmission based on the transmission behavior.

It can be understood that, for an implementation process of S330, reference may be made to related descriptions in the method embodiments 200. To avoid repetition, details are not described herein again.

In this embodiment, different signaling is configured to transmit the first information. This can improve flexibility and reliability for transmitting the first information, to further ensure quality of wireless communication.

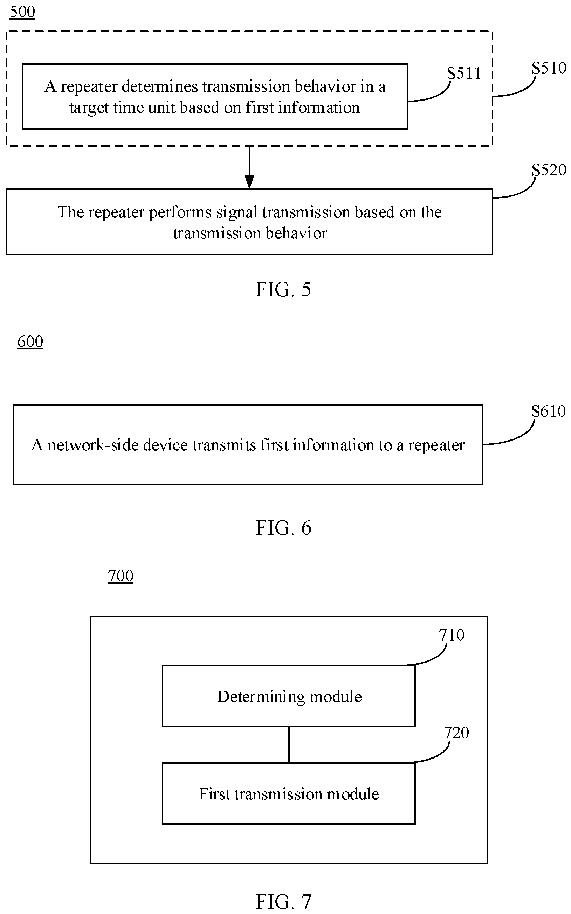

FIG. 5 is a schematic flowchart of a signal transmission method 500 according to an example embodiment of this application. The method 500 may be performed by a repeater but is not limited thereto, and may be specifically performed by hardware and/or software installed in the repeater. In this embodiment, the method 500 may include at least the following steps.

S510: The repeater determines transmission behavior based on first information.

The first information includes TDD configuration information and/or data scheduling information.

It can be understood that, for an implementation process of S510, reference may be made to related descriptions in the method embodiment 200 or 300. In addition, in a possible implementation, still as shown in FIG. 5, the implementation process of S510 may further include S511. Content is as follows:
S511: The repeater determines transmission behavior in a target time unit based on the first information.

In an implementation, that the repeater determines transmission behavior in a target time unit based on the first information includes any one of the following (601) to (606).

(601) In a case that it is determined, based on the first information, that the target time unit is a flexible time unit, the transmission behavior of the repeater in the target time unit is uplink transmission.

For example, if a resource is configured as a flexible symbol, the repeater considers the symbol as a UL symbol by default, and receives, amplifies, and forwards an uplink signal based on the UL symbol.

(602) In a case that it is determined, based on the first information, that the target time unit is a flexible time unit, the transmission behavior of the repeater in the target time unit is downlink transmission.

For example, if a resource is configured as a flexible symbol, the repeater considers the symbol as a DL symbol by default, and receives, amplifies, and forwards a downlink signal based on the DL symbol.

(603) In a case that it is determined, based on the first information, that the target time unit is a flexible time unit, the transmission behavior of the repeater in the target time unit is no transmission.

For example, if a resource is configured as a flexible symbol, the repeater does not receive, amplify, or forward an uplink or downlink signal on the flexible symbol to avoid interference.

(604) In a case that it is determined, based on the first information, that the target time unit is a flexible time unit and no first indication signaling is received, the transmission behavior of the repeater in the target time unit is no transmission.

For example, if a resource is configured as a flexible symbol, in a case that the repeater does not receive an uplink/downlink direction indication or a base station scheduling indication (namely, the first indication signaling) for the flexible symbol, the repeater does not receive, amplify, or forward an uplink or downlink signal on the flexible symbol to avoid interference.

The first indication information is used by the base station to indicate whether a flexible symbol of the smart repeater is used for UL amplification or DL amplification.

(605) In a case that it is determined, based on the first information, that the target time unit is a flexible time unit and second indication signaling is received but the second indication signaling indicates that the target time unit is a flexible time unit, the transmission behavior of the repeater in the target time unit is no transmission.

For example, if a resource is configured as a flexible symbol, in a case that the repeater receives an uplink/downlink direction indication or a base station scheduling indication (namely, the second indication signaling) for the flexible symbol and the uplink/downlink direction indication or the base station scheduling indication indicates that the flexible symbol is a flexible time unit, the repeater does not receive, amplify, or forward an uplink or downlink signal on the flexible symbol to avoid interference.

(606) In a case that it is determined, based on the first information, that the target time unit is a flexible time unit, second indication signaling is received, and the second indication signaling indicates that the target time unit is not an uplink or downlink time unit, the transmission behavior of the repeater in the target time unit is no transmission.

For an implementation process of (606), refer to the descriptions in (605). To avoid repetition, this is not described in detail again.

Further, in this embodiment, in a case that the repeater does not receive the first information, the repeater may perform at least one of the following (701) and (702):
(701) transmitting a TDD pattern request to the network-side device, where
   the TDD pattern request is used for requesting first information, such as dedicated TDD configuration information or data scheduling information, from the network-side device; and
(702) determining the transmission behavior based on specified TDD configuration information, where the specified TDD configuration information is TDD configuration information configured by the network-side device for the terminal.

That is, the repeater may directly use TDD configuration information that is configured for common UE and that is received in a SIB 1 or cell specific RRC, and determine the transmission behavior based on the TDD configuration information.

It should be noted that, after the repeater determines the transmission behavior based on the specified TDD configuration information, in a case that the repeater receives the first information transmitted by the network-side device, the repeater stops performing the step of determining the transmission behavior based on the specified TDD configuration information, and performs the step of determining the transmission behavior based on the first information. That is, when the repeater receives dedicated TDD configuration information transmitted by the network-side device, the repeater stops using the TDD configuration information that is configured for the common UE and that is received in the SIB1, and uses the newly received dedicated TDD configuration information to determine the transmission behavior.

Further, in an implementation, assuming that the first information is transmitted by using an SFI, when the repeater receives SFI configurations from a plurality of network-side devices (for example, donor nodes), the repeater requires that at most one of a plurality of SFIs corresponding to one slot/symbol indicate DL/UL and other SFIs indicate being flexible, in other words, the repeater can serve only one network-side device at a time. In this case, if the repeater receives SFIs (namely, first information) transmitted by the plurality of network-side devices, the repeater meets at least one of the following (801) to (804):
(801) not supporting or refusing configuration information of a plurality of pieces of first information, where
   "not supporting" and "refusing (Refuse)" in this embodiment may also be understood as prohibiting, suspending, releasing, or the like, and this is not limited herein;
(802) not supporting or refusing a plurality of pieces of first information indicating that the target time unit is used for uplink transmission and downlink transmission;
(803) supporting a plurality of pieces of first information indicating that the target time unit is an uplink time unit, a downlink time unit, or a flexible time unit; and
(804) determining, from at least two pieces of first information according to a preset rule, first information used for determining the transmission behavior, where
   the preset rule may be agreed upon in a protocol, implemented through higher-layer configuration, or configured by a network-side device, and this is not limited herein. In a possible implementation, the determining, from at least two pieces of first information according to a preset rule, first information used for determining the transmission behavior may include at least one of the following (9041) and (9042):
   (9041) determining, from the at least two pieces of first information based on identification information of the network-side devices, the first information used for determining the transmission behavior; and
   (9042) determining, from the at least two pieces of first information based on priority information of the network-side devices, the first information used for determining the transmission behavior.

Based on this, the repeater performs uplink transmission or downlink transmission based on target transmission configuration indicator (Transmission Configuration Indicator, TCI) information, where the target TCI information is TCI information of a network-side device that transmits the determined first information.

S520: The repeater performs signal transmission based on the transmission behavior.

It can be understood that, for an implementation process of S520, reference may be made to related descriptions in the method embodiments 200. To avoid repetition, details are not described herein again.

In this embodiment, manners of determining the transmission behavior in different scenarios are further provided. This can further ensure quality of wireless communication.

FIG. 6 is a schematic flowchart of a signal transmission method 600 according to an example embodiment of this application. The method 600 may be performed by a network-side device but is not limited thereto, and may be specifically performed by hardware and/or software installed in the network-side device. In this embodiment, the method 600 may include at least the following steps.

S610: The network-side device transmits first information to a repeater.

The first information includes time division duplex TDD configuration information and/or data scheduling information.

In a possible implementation, the TDD configuration information is determined by the network-side device based on at least one of the following: TDD configuration information of a terminal accessing the repeater; and data scheduling information of the terminal accessing the repeater.

In a possible implementation, the first information is transmitted by using at least one of the following: F1 signaling, a SIB, a MIB, a PDCCH, RRC, a MAC CE, and an SFI.

In a possible implementation, the RRC includes at least one of cell specific RRC signaling, UE dedicated signaling, MT dedicated signaling, and repeater (repeater) dedicated signaling.

In a possible implementation, second information corresponding to the PDCCH or the SFI meets one of the following that: the second information is dedicated for the repeater; and the second information is shared by a plurality of repeaters, where the second information includes at least one of a search space, an RNTI, and a DCI format.

In a possible implementation, configuration information of the PDCCH is transmitted by using a SIB and/or a MIB.

In a possible implementation, the configuration information of the PDCCH includes at least one of the following: a time domain resource for detecting the PDCCH; a frequency domain resource for detecting the PDCCH; and the number of times of detecting the PDCCH.

In a possible implementation, in a case that the first information is transmitted by using third information, a type of the third information is related to whether the repeater is in a connected state.

In a possible implementation, that a type of the third information is related to whether the repeater is in a connected state includes any one of the following that: in a case that the repeater is in a non-connected state, the third information is at least one of a SIB, a MIB, and a PDCCH; and in a case that the repeater is in the connected state, the third information is at least one of F 1 signaling, a SIB, a MIB, a PDCCH, RRC, a MAC CE, and an SFI.

In a possible implementation, before the network-side device transmits the first information to the repeater, the method further includes: The network-side device receives a TDD pattern request transmitted by the repeater.

In this embodiment, the network-side device transmits the TDD configuration information and/or the data scheduling information to the repeater, so that the repeater can determine transmission behavior based on the TDD configuration information and/or the data scheduling information and then perform signal transmission based on the transmission behavior. In this way, the repeater can clearly determine whether UL amplification or DL amplification should be performed, to match a corresponding beam/power control mode, so as to implement effective signal transmission and ensure performance of wireless communication.

It should be noted that the signal transmission methods 200 to 600 provided in the embodiments of this application may be performed by a signal transmission apparatus, or by a control module that is in the signal transmission apparatus and that is configured to perform the signal transmission methods. In the embodiments of this application, a signal transmission apparatus provided in the embodiments of this application is described by using an example in which the signal transmission apparatus performs the signal transmission methods.

FIG. 7 is a schematic structural diagram of a signal transmission apparatus 700 according to an example embodiment of this application. The apparatus 700 includes: a determining module 710, configured to determine, for a repeater, transmission behavior based on first information, where the first information includes time division duplex TDD configuration information and/or data scheduling information; and a first transmission module 720, configured to perform signal transmission based on the transmission behavior.

In a possible implementation, the TDD configuration information is determined by a network-side device based on at least one of the following: TDD configuration information of a terminal accessing the repeater; and data scheduling information of the terminal accessing the repeater.

In another possible implementation, the first information is transmitted by using at least one of the following: F 1 signaling, a SIB, a MIB, a PDCCH, RRC, a MAC CE, and an SFI.

In another possible implementation, the RRC includes at least one of cell specific RRC signaling, UE dedicated signaling, MT dedicated signaling, and repeater dedicated signaling.

In another possible implementation, second information corresponding to the PDCCH or the SFI meets one of the following that: the second information is dedicated for the repeater; and the second information is shared by a plurality of repeaters, where the second information includes at least one of a search space, a radio network temporary identifier RNTI, and a DCI format.

In another possible implementation, configuration information of the PDCCH is transmitted by using a SIB and/or a MIB.

In another possible implementation, the configuration information of the PDCCH includes at least one of the following: a time domain resource for detecting the PDCCH; a frequency domain resource for detecting the PDCCH; and the number of times of detecting the PDCCH.

In another possible implementation, in a case that the first information is transmitted by using third information, a type of the third information is related to whether the repeater is in a connected state.

In another possible implementation, that a type of the third information is related to whether the repeater is in a connected state includes any one of the following that: in a case that the repeater is in a non-connected state, the third information is at least one of a SIB, a MIB, and a PDCCH; and in a case that the repeater is in the connected state, the third information is at least one of F 1 signaling, a SIB, a MIB, a PDCCH, RRC, a MAC CE, and an SFI.

In another possible implementation, validity time of the third information is determined based on a first value and a first time unit in which the third information is received; or validity time of the third information is determined based on first indication information transmitted by a network-side device; or validity time of the third information is determined based on time at which next third information is received.

In another possible implementation, that validity time of the third information is determined based on time at which next third information is received includes: that the validity time of the third information starts from a validity start time point of the third information and ends at a time point at which next valid third information is received.

In another possible implementation, the apparatus 700 further includes an update module, and the update module is configured to perform any one of the following operations: updating an uplink time unit, a downlink time unit, and a flexible time unit in a second TDD pattern based on a first TDD pattern; updating a flexible time unit in a second TDD pattern based on a first TDD pattern; updating an uplink time unit in a second TDD pattern based on a first TDD pattern; and updating a downlink time unit in a second TDD pattern based on a first TDD pattern, where the first TDD pattern is determined based on the first information, and the second TDD pattern is determined based on fourth information.

In another possible implementation, at least one of start time, end time, and duration of the first TDD pattern is determined based on the first information.

In another possible implementation, the fourth information is transmitted by using a SIB or a MIB in a case that the first information is transmitted by using RRC signaling; the fourth information is transmitted by using either a SIB or a MIB in a case that the first information is transmitted by using cell specific RRC signaling; the fourth information is transmitted by using any one of cell specific RRC signaling, a SIB, or a MIB in a case that the first information is transmitted by using any one of UE dedicated RRC signaling, MT dedicated RRC signaling, or repeater dedicated RRC signaling; the fourth information is transmitted by using RRC in a case that the first information is transmitted by using a first SFI; and the fourth information is transmitted by using a second SFI in a case that the first information is transmitted by using a first SFI.

In another possible implementation, that the fourth information is transmitted by using a second SFI in a case that the first information is transmitted by using a first SFI includes at least one of the following that: the second SFI is a UE dedicated SFI in a case that the first SFI is a UE dedicated SFI; the second SFI is a UE dedicated SFI in a case that the first SFI is an MT dedicated SFI or a repeater dedicated SFI; the second SFI is an MT dedicated SFI or a repeater dedicated SFI in a case that the first SFI is an MT dedicated SFI or a repeater dedicated SFI; and the second SFI is an MT dedicated SFI or a repeater dedicated SFI in a case that the first SFI is a UE dedicated SFI.

In another possible implementation, the apparatus 700 further includes an execution module, and in a case that the repeater does not receive the first information, the execution module is configured to perform at least one of the following operations: transmitting a TDD pattern request to the network-side device; and determining the transmission behavior based on specified TDD configuration information, where the specified TDD configuration information is TDD configuration information configured by the network-side device for the terminal.

In another possible implementation, after determining the transmission behavior based on the specified TDD configuration information, the execution module is further configured to: in a case that the repeater receives the first information transmitted by the network-side device, perform the step of determining the transmission behavior based on the first information.

In another possible implementation, the determining module 710 is configured to determine transmission behavior in a target time unit based on the first information.

In another possible implementation, the determining module 710 is configured to determine any one of the following that: in a case that it is determined, based on the first information, that the target time unit is a flexible time unit, the transmission behavior of the repeater in the target time unit is uplink transmission; in a case that it is determined, based on the first information, that the target time unit is a flexible time unit, the transmission behavior of the repeater in the target time unit is downlink transmission; in a case that it is determined, based on the first information, that the target time unit is a flexible time unit, the transmission behavior of the repeater in the target time unit is no transmission; in a case that it is determined, based on the first information, that the target time unit is a flexible time unit and no first indication signaling is received, the transmission behavior of the repeater in the target time unit is no transmission; in a case that it is determined, based on the first information, that the target time unit is a flexible time unit and second indication signaling is received but the second indication signaling indicates that the target time unit is a flexible time unit, the transmission behavior of the repeater in the target time unit is no transmission; and in a case that it is determined, based on the first information, that the target time unit is a flexible time unit, second indication signaling is received, and the second indication signaling indicates that the target time unit is not an uplink or downlink time unit, the transmission behavior of the repeater in the target time unit is no transmission.

In another possible implementation, in a case that first information transmitted by a plurality of network-side devices is received, the repeater meets at least one of the following: not supporting or refusing configuration information of a plurality of pieces of first information; not supporting or refusing a plurality of pieces of first information indicating that the target time unit is used for uplink transmission and downlink transmission; supporting a plurality of pieces of first information indicating that the target time unit is an uplink time unit, a downlink time unit, or a flexible time unit; and determining, from at least two pieces of first information according to a preset rule, first information used for determining the transmission behavior.

In another possible implementation, the determining, from at least two pieces of first information according to a preset rule, first information used for determining the transmission behavior includes at least one of the following: determining, from the at least two pieces of first information based on identification information of the network-side devices, the first information used for determining the transmission behavior; and determining, from the at least two pieces of first information based on priority information of the network-side devices, the first information used for determining the transmission behavior.

In another possible implementation, in the case of determining, from at least two pieces of first information according to a preset rule, first information used for determining the transmission behavior, the first transmission module 720 is further configured to perform uplink transmission or downlink transmission based on target transmission configuration indicator TCI information, where the target TCI information is TCI information of a network-side device that transmits the determined first information.

In this embodiment, the repeater determines the transmission behavior based on the TDD configuration information and/or the data scheduling information, and then performs signal transmission based on the transmission behavior. In this way, whether UL amplification or DL amplification should be performed can be made clear, to match a corresponding beam (beam)/power control mode, so as to implement effective signal transmission and ensure performance of wireless communication.

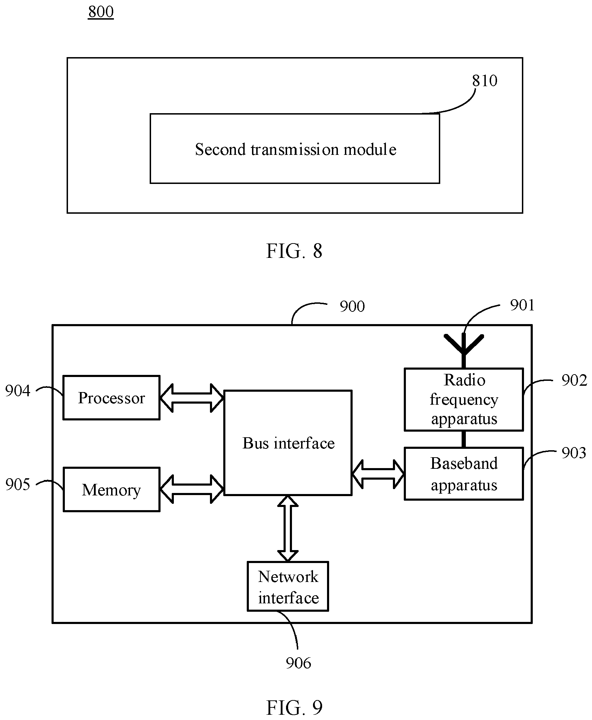

FIG. 8 is a schematic structural diagram of a signal transmission apparatus 800 according to an example embodiment of this application. The apparatus 800 includes: a second transmission module 810, configured to transmit first information to a repeater, where the first information includes time division duplex TDD configuration information and/or data scheduling information.

In a possible implementation, the TDD configuration information is determined by a network-side device based on at least one of the following: TDD configuration information of a terminal accessing the repeater; and data scheduling information of the terminal accessing the repeater.

In another possible implementation, the first information is transmitted by using at least one of the following: F1 signaling, a system information block SIB, a master information block MIB, a physical downlink control channel PDCCH, radio resource control RRC, a medium access control-control element MAC CE, and a slot format indication SFI.

In another possible implementation, the RRC includes at least one of cell specific (cell specific) RRC signaling, UE dedicated (UE dedicated) signaling, MT dedicated signaling, and repeater (repeater) dedicated signaling.

In another possible implementation, second information corresponding to the PDCCH or the SFI meets one of the following that: the second information is dedicated for the repeater; and the second information is shared by a plurality of repeaters, where the second information includes at least one of a search space, a radio network temporary identifier RNTI, and a DCI format.

In another possible implementation, configuration information of the PDCCH is transmitted by using a SIB and/or a MIB.

In another possible implementation, the configuration information of the PDCCH includes at least one of the following: a time domain resource for detecting the PDCCH; a frequency domain resource for detecting the PDCCH; and the number of times of detecting the PDCCH.

In another possible implementation, in a case that the first information is transmitted by using third information, a type of the third information is related to whether the repeater is in a connected state.

In another possible implementation, that a type of the third information is related to whether the repeater is in a connected state includes any one of the following that: in a case that the repeater is in a non-connected state, the third information is at least one of a SIB, a MIB, and a PDCCH; and in a case that the repeater is in the connected state, the third information is at least one of F1 signaling, a SIB, a MIB, a PDCCH, RRC, a MAC CE, and an SFI.

In another possible implementation, the second transmission module 810 is further configured to receive a TDD pattern request transmitted by the repeater.

In this embodiment, the TDD configuration information and/or the data scheduling information are transmitted to the repeater, so that the repeater can determine transmission behavior based on the TDD configuration information and/or the data scheduling information and then perform signal transmission based on the transmission behavior. In this way, the repeater can clearly determine whether UL amplification or DL amplification should be performed, to match a corresponding beam (beam)/power control mode, so as to implement effective signal transmission and ensure performance of wireless communication.

The signal transmission apparatus 700 or 800 in the embodiments of this application may be an apparatus, or an apparatus or a network-side device with an operating system, or may be a component, an integrated circuit, or a chip in a network-side device.

The signal transmission apparatus 700 or 800 provided in the embodiments of this application is capable of implementing the processes implemented in the method embodiments of FIG. 2 to FIG. 6, with the same technical effect achieved. To avoid repetition, details are not described herein again.

An embodiment of this application further provides a repeater, including a processor and a communication interface, where the communication interface is coupled to the processor, and the processor is configured to run a program or instructions, to implement the methods in the method embodiments 200 to 500. The repeater embodiment corresponds to the foregoing method embodiments for the repeater, and all implementation processes and implementations of the foregoing method embodiments are applicable to the repeater embodiment, with the same technical effect achieved.

Specifically, an embodiment of this application further provides a repeater. As shown in FIG. 9, the repeater 900 includes an antenna 901, a radio frequency apparatus 902, and a baseband apparatus 903. The antenna 901 is connected to the radio frequency apparatus 902. In an uplink direction, the radio frequency apparatus 902 receives information through the antenna 901, and transmits the received information to the baseband apparatus 903 for processing. In a downlink direction, the baseband apparatus 903 processes to-be-transmitted information, and transmits the information to the radio frequency apparatus 902; and the radio frequency apparatus 902 processes the received information and then transmits the information through the antenna 901.

The frequency band processing apparatus may be located in the baseband apparatus 903. The method performed by the repeater in the foregoing embodiments may be implemented in the baseband apparatus 903, and the baseband apparatus 903 includes a processor 904 and a memory 905.

The baseband apparatus 903 may include, for example, at least one baseband board, where a plurality of chips are disposed on the baseband board. As shown in FIG. 9, one of the chips is, for example, the processor 904, and connected to the memory 905, to invoke the program in the memory 905 to perform the operations of the network device shown in the foregoing method embodiments.

The baseband apparatus 903 may further include a network interface 906, configured to exchange information with the radio frequency apparatus 902. The interface is, for example, a common public radio interface (common public radio interface, CPRI for short).

Specifically, the repeater in this embodiment of the present invention further includes instructions or a program stored in the memory 905 and executable on the processor 904, and the processor 904 invokes the instructions or program in the memory 905 to perform the method performed by the modules shown in FIG. 7, with the same technical effect achieved. To avoid repetition, details are not described herein again.

An embodiment of this application further provides a network-side device, including a processor and a communication interface, where the communication interface is coupled to the processor, and the processor is configured to run a program or instructions, to implement the method in the method embodiment 600. The network-side device embodiment corresponds to the foregoing method embodiment for the network-side device, and all implementation processes and implementations of the foregoing method embodiment are applicable to the network-side device embodiment, with the same technical effect achieved.

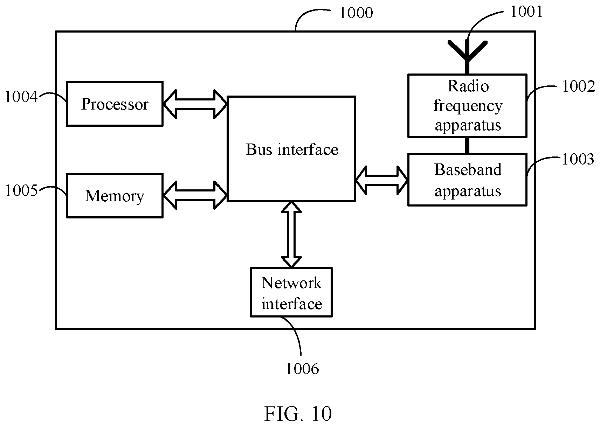

Specifically, an embodiment of this application further provides a network-side device. As shown in FIG. 10, the network-side device 1000 includes an antenna 1001, a radio frequency apparatus 1002, and a baseband apparatus 1003. The antenna 1001 is connected to the radio frequency apparatus 1002. In an uplink direction, the radio frequency apparatus 1002 receives information through the antenna 1001, and transmits the received information to the baseband apparatus 1003 for processing. In a downlink direction, the baseband apparatus 1003 processes to-be-transmitted information, and transmits the information to the radio frequency apparatus 1002; and the radio frequency apparatus 1002 processes the received information and then transmits the information through the antenna 1001.

The frequency band processing apparatus may be located in the baseband apparatus 1003. The method performed by the network-side device in the foregoing embodiments may be implemented in the baseband apparatus 1003, and the baseband apparatus 1003 includes a processor 1004 and a memory 1005.

The baseband apparatus 1003 may include, for example, at least one baseband board, where a plurality of chips are disposed on the baseband board. As shown in FIG. 10, one of the chips is, for example, the processor 1004, and connected to the memory 1005, to invoke the program in the memory 1005 to perform the operations of the network device shown in the foregoing method embodiments.

The baseband apparatus 1003 may further include a network interface 1006, configured to exchange information with the radio frequency apparatus 1002. The interface is, for example, a common public radio interface (common public radio interface, CPRI for short).

Specifically, the network-side device in this embodiment of the present invention further includes instructions or a program stored in the memory 1005 and executable on the processor 1004, and the processor 1004 invokes the instructions or program in the memory 1005 to perform the method performed by the modules shown in FIG. 8, with the same technical effect achieved. To avoid repetition, details are not described herein again.

An embodiment of this application further provides a readable storage medium. The readable storage medium stores a program or instructions. When the program or instructions are executed by a processor, the processes of the embodiments of the signal transmission method are implemented, with the same technical effect achieved. To avoid repetition, details are not described herein again.

The processor is a processor in the terminal in the foregoing embodiments. The readable storage medium includes a computer-readable storage medium, for example, a computer read-only memory (Read-Only Memory, ROM).

An embodiment of this application further provides a chip. The chip includes a processor and a communication interface. The communication interface is coupled to the processor. The processor is configured to run a program or instructions for a network side device, to implement the processes of the signal transmission method embodiment, with the same technical effect achieved. To avoid repetition, details are not described herein again.

It should be understood that the chip provided in the embodiments of this application may also be referred to as a system-level chip, a system on chip, a chip system, a system-on-a-chip, or the like.

An embodiment of this application further provides a computer program product. The computer program product includes a processor, a memory, and a program or instructions stored in the memory and executable on the processor. When the program or instructions are executed by the processor, the processes of the foregoing signal transmission method embodiments are implemented, with the same technical effect achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a ..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes embodiments of this application with reference to the accompanying drawings. However, this application is not limited to the foregoing specific implementations. The foregoing specific implementations are merely examples, but are not limitative. Inspired by this application, persons of ordinary skill in the art may further make many modifications without departing from the purposes of this application and the protection scope of the claims, and all the modifications shall fall within the protection scope of this application.

## Claims

1. A signal transmission method, comprising:
determining, by a repeater, transmission behavior based on first information, wherein the first information comprises time division duplex TDD configuration information and/or data scheduling information; and
performing, by the repeater, signal transmission based on the transmission behavior.

2. The method according to claim 1, wherein the TDD configuration information is determined by a network-side device based on at least one of following:
TDD configuration information of a terminal accessing the repeater; and
data scheduling information of the terminal accessing the repeater.

3. The method according to claim 1, wherein the first information is transmitted by using at least one of following:
F1 signaling, a system information block SIB, a master information block MIB, a physical downlink control channel PDCCH, radio resource control RRC, a medium access control-control element MAC CE, and a slot format indication SFI.

4. The method according to claim 3, wherein the RRC comprises at least one of cell specific (cell specific) RRC signaling, UE dedicated (UE dedicated) signaling, MT dedicated signaling, and repeater (repeater) dedicated signaling.

5. The method according to claim 3, wherein second information corresponding to the PDCCH or the SFI meets one of following that:
the second information is dedicated for the repeater; and
the second information is shared by a plurality of repeaters, wherein
the second information comprises at least one of a search space, a radio network temporary identifier RNTI, and a DCI format.

6. The method according to claim 3, wherein configuration information of the PDCCH is transmitted by using a SIB and/or a MIB.

7. The method according to claim 3, wherein configuration information of the PDCCH comprises at least one of following:
a time domain resource for detecting the PDCCH;
a frequency domain resource for detecting the PDCCH; and
a number of times of detecting the PDCCH.

8. The method according to claim 1, wherein in a case that the first information is transmitted by using third information, a type of the third information is related to whether the repeater is in a connected state.

9. The method according to claim 8, wherein that the type of the third information is related to whether the repeater is in a connected state comprises any one of following that:
in a case that the repeater is in a non-connected state, the third information is at least one of a SIB, a MIB, and a PDCCH; and
in a case that the repeater is in the connected state, the third information is at least one of F1 signaling, a SIB, a MIB, a PDCCH, RRC, a MAC CE, and an SFI.

10. The method according to claim 9, wherein validity time of the third information is determined based on a first value and a first time unit in which the third information is received; or
validity time of the third information is determined based on first indication information transmitted by a network-side device; or
validity time of the third information is determined based on time at which next third information is received.

11. The method according to claim 10, wherein that the validity time of the third information is determined based on the time at which the next third information is received comprises:
that the validity time of the third information starts from a validity start time point of the third information and ends at a time point at which next valid third information is received.

12. The method according to any one of claims 1 to 11, wherein the method further comprises any one of following:
updating an uplink time unit, a downlink time unit, and a flexible time unit in a second TDD pattern based on a first TDD pattern;
updating a flexible time unit in a second TDD pattern based on a first TDD pattern;
updating an uplink time unit in a second TDD pattern based on a first TDD pattern; and
updating a downlink time unit in a second TDD pattern based on a first TDD pattern, wherein
the first TDD pattern is determined based on the first information, and the second TDD pattern is determined based on fourth information.

13. The method according to claim 12, wherein at least one of start time, end time, and duration of the first TDD pattern is determined based on the first information.

14. The method according to claim 12, wherein
the fourth information is transmitted by using a SIB or a MIB in a case that the first information is transmitted by using RRC signaling;
the fourth information is transmitted by using either a SIB or a MIB in a case that the first information is transmitted by using cell specific RRC signaling;
the fourth information is transmitted by using any one of cell specific RRC signaling, a SIB, or a MIB in a case that the first information is transmitted by using any one of UE dedicated RRC signaling, MT dedicated RRC signaling, or repeater dedicated RRC signaling;
the fourth information is transmitted by using RRC in a case that the first information is transmitted by using a first SFI; and
the fourth information is transmitted by using a second SFI in a case that the first information is transmitted by using a first SFI.

15. The method according to claim 14, wherein that the fourth information is transmitted by using the second SFI in the case that the first information is transmitted by using the first SFI comprises at least one of following that:
the second SFI is a UE dedicated SFI in a case that the first SFI is a UE dedicated SFI;
the second SFI is a UE dedicated SFI in a case that the first SFI is an MT dedicated SFI or a repeater dedicated SFI;
the second SFI is an MT dedicated SFI or a repeater dedicated SFI in a case that the first SFI is an MT dedicated SFI or a repeater dedicated SFI; and
the second SFI is an MT dedicated SFI or a repeater dedicated SFI in a case that the first SFI is a UE dedicated SFI.

16. The method according to any one of claims 1 to 11, wherein before the determining, by a repeater, transmission behavior based on first information, the method further comprises:
in a case that the repeater does not receive the first information, performing at least one of following operations:
transmitting a TDD pattern request to a network-side device; and
determining the transmission behavior based on specified TDD configuration information, wherein the specified TDD configuration information is TDD configuration information configured by the network-side device for a terminal.

17. The method according to claim 16, wherein after the determining the transmission behavior based on specified TDD configuration information, the method further comprises:
in a case that the repeater receives the first information transmitted by the network-side device, performing, by the repeater, a step of determining the transmission behavior based on the first information.

18. The method according to any one of claims 1 to 11, wherein the determining, by a repeater, transmission behavior based on first information comprises:
determining, by the repeater, transmission behavior in a target time unit based on the first information.

19. The method according to claim 18, wherein the determining, by the repeater, transmission behavior in a target time unit based on the first information comprises any one of following that:
in a case that it is determined, based on the first information, that the target time unit is a flexible time unit, the transmission behavior of the repeater in the target time unit is uplink transmission;
in a case that it is determined, based on the first information, that the target time unit is a flexible time unit, the transmission behavior of the repeater in the target time unit is downlink transmission;
in a case that it is determined, based on the first information, that the target time unit is a flexible time unit, the transmission behavior of the repeater in the target time unit is no transmission;
in a case that it is determined, based on the first information, that the target time unit is a flexible time unit and no first indication signaling is received, the transmission behavior of the repeater in the target time unit is no transmission;
in a case that it is determined, based on the first information, that the target time unit is a flexible time unit and second indication signaling is received but the second indication signaling indicates that the target time unit is a flexible time unit, the transmission behavior of the repeater in the target time unit is no transmission; and
in a case that it is determined, based on the first information, that the target time unit is a flexible time unit, second indication signaling is received, and the second indication signaling indicates that the target time unit is not an uplink or downlink time unit, the transmission behavior of the repeater in the target time unit is no transmission.

20. The method according to claim 18, wherein before the determining, by a repeater, transmission behavior based on first information, the method further comprises:
in a case that first information transmitted by a plurality of network-side devices is received, meeting, by the repeater, at least one of following:
not supporting or refusing configuration information of a plurality of pieces of first information;
not supporting or refusing a plurality of pieces of first information indicating that the target time unit is used for uplink transmission and downlink transmission;
supporting a plurality of pieces of first information indicating that the target time unit is an uplink time unit, a downlink time unit, or a flexible time unit; and
determining, from at least two pieces of first information according to a preset rule, first information used for determining the transmission behavior.

21. The method according to claim 20, wherein the determining, from at least two pieces of first information according to a preset rule, first information used for determining the transmission behavior comprises at least one of following:
determining, from the at least two pieces of first information based on identification information of the network-side devices, the first information used for determining the transmission behavior; and
determining, from the at least two pieces of first information based on priority information of the network-side devices, the first information used for determining the transmission behavior.

22. The method according to claim 20, wherein in the case of determining, from at least two pieces of first information according to a preset rule, first information used for determining the transmission behavior, the method further comprises:
performing, by the repeater, uplink transmission or downlink transmission based on target transmission configuration indicator TCI information, wherein
the target TCI information is TCI information of a network-side device that transmits the determined first information.

23. A signal transmission method, comprising:
transmitting, by a network-side device, first information to a repeater, wherein
the first information comprises time division duplex TDD configuration information and/or data scheduling information.

24. The method according to claim 23, wherein the TDD configuration information is determined by the network-side device based on at least one of following:
TDD configuration information of a terminal accessing the repeater; and
data scheduling information of the terminal accessing the repeater.

25. The method according to claim 23, wherein the first information is transmitted by using at least one of following:
F1 signaling, a system information block SIB, a master information block MIB, a physical downlink control channel PDCCH, radio resource control RRC, a medium access control-control element MAC CE, and a slot format indication SFI.

26. The method according to claim 25, wherein the RRC comprises at least one of cell specific (cell specific) RRC signaling, UE dedicated (UE dedicated) signaling, MT dedicated signaling, and repeater (repeater) dedicated signaling.

27. The method according to claim 25, wherein second information corresponding to the PDCCH or the SFI meets one of following that:
the second information is dedicated for the repeater; and
the second information is shared by a plurality of repeaters, wherein
the second information comprises at least one of a search space, a radio network temporary identifier RNTI, and a DCI format.

28. The method according to claim 25, wherein configuration information of the PDCCH is transmitted by using a SIB and/or a MIB.

29. The method according to claim 25, wherein configuration information of the PDCCH comprises at least one of following:
a time domain resource for detecting the PDCCH;
a frequency domain resource for detecting the PDCCH;
a time-frequency domain resource for detecting the PDCCH; and
a number of times of detecting the PDCCH.

30. The method according to claim 25, wherein in a case that the first information is transmitted by using third information, a type of the third information is related to whether the repeater is in a connected state.

31. The method according to claim 30, wherein that the type of the third information is related to whether the repeater is in a connected state comprises any one of following that:
in a case that the repeater is in a non-connected state, the third information is at least one of a SIB, a MIB, and a PDCCH; and
in a case that the repeater is in the connected state, the third information is at least one of F1 signaling, a SIB, a MIB, a PDCCH, RRC, a MAC CE, and an SFI.

32. The method according to any one of claims 23 to 31, wherein before the transmitting, by a network-side device, first information to a repeater, the method further comprises:
receiving, by the network-side device, a TDD pattern request transmitted by the repeater.

33. A signal transmission apparatus, applied to a repeater, wherein the apparatus comprises:
a determining module, configured to determine, for the repeater, transmission behavior based on first information, wherein the first information comprises time division duplex TDD configuration information and/or data scheduling information; and
a first transmission module, configured to perform signal transmission based on the transmission behavior.

34. The apparatus according to claim 33, wherein the first information is transmitted by using at least one of following:
F1 signaling, a system information block SIB, a master information block MIB, a physical downlink control channel PDCCH, radio resource control RRC, a medium access control-control element MAC CE, and a slot format indication SFI.

35. The apparatus according to claim 33, wherein the apparatus further comprises an update module, and the update module is configured to perform any one of following operations:
updating an uplink time unit, a downlink time unit, and a flexible time unit in a second TDD pattern based on a first TDD pattern;
updating a flexible time unit in a second TDD pattern based on a first TDD pattern;
updating an uplink time unit in a second TDD pattern based on a first TDD pattern; and
updating a downlink time unit in a second TDD pattern based on a first TDD pattern, wherein
the first TDD pattern is determined based on the first information, and the second TDD pattern is determined based on fourth information.

36. The apparatus according to claim 33, wherein the determining module is configured to determine transmission behavior in a target time unit based on the first information.

37. The apparatus according to claim 36, wherein the determining module is configured to determine any one of following that:
in a case that it is determined, based on the first information, that the target time unit is a flexible time unit, the transmission behavior of the repeater in the target time unit is uplink transmission;
in a case that it is determined, based on the first information, that the target time unit is a flexible time unit, the transmission behavior of the repeater in the target time unit is downlink transmission;
in a case that it is determined, based on the first information, that the target time unit is a flexible time unit, the transmission behavior of the repeater in the target time unit is no transmission;
in a case that it is determined, based on the first information, that the target time unit is a flexible time unit and no first indication signaling is received, the transmission behavior of the repeater in the target time unit is no transmission;
in a case that it is determined, based on the first information, that the target time unit is a flexible time unit and second indication signaling is received but the second indication signaling indicates that the target time unit is a flexible time unit, the transmission behavior of the repeater in the target time unit is no transmission; and
in a case that it is determined, based on the first information, that the target time unit is a flexible time unit, second indication signaling is received, and the second indication signaling indicates that the target time unit is not an uplink or downlink time unit, the transmission behavior of the repeater in the target time unit is no transmission.

38. The apparatus according to claim 33, wherein the apparatus further comprises:
in a case that first information transmitted by a plurality of network-side devices is received, meeting, by the repeater, at least one of following:
not supporting or refusing configuration information of a plurality of pieces of first information;
not supporting or refusing a plurality of pieces of first information indicating that the target time unit is used for uplink transmission and downlink transmission;
supporting a plurality of pieces of first information indicating that the target time unit is an uplink time unit, a downlink time unit, or a flexible time unit; and
determining, from at least two pieces of first information according to a preset rule, first information used for determining the transmission behavior.

39. A signal transmission apparatus, comprising:
a second transmission module, configured to transmit first information to a repeater, wherein
the first information comprises time division duplex TDD configuration information and/or data scheduling information.

40. A repeater, comprising a processor, a memory, and a program or instructions stored in the memory and executable on the processor, wherein when the program or instructions are executed by the processor, steps of the method according to any one of claims 1 to 22 are implemented.

41. A network-side device, comprising a processor, a memory, and a program or instructions stored in the memory and executable on the processor, wherein when the program or instructions are executed by the processor, steps of the method according to any one of claims 23 to 32 are implemented.

42. A readable storage medium, wherein the readable storage medium stores a program or instructions, and when the program or instructions are executed by a processor, steps of the method according to any one of claims 1 to 22 is implemented, or steps of the method according to any one of claims 23 to 32 are implemented.
